# EUROPÄISCHE PATENTANMELDUNG

(11) **EP 1 036 676 A2**
(43) Veröffentlichungstag der Anmeldung: **20.09.2000**
(21) Anmeldenummer: 00103646.6
(22) Anmeldetag: 21.02.2000
(51) Int. Cl.: B60D 1/40, B60D 1/44

(54) **Anhängerdeichsel**

(30) Priorität: 15.03.1999 DE 19911392
(71) Anmelder: Ing. Büro Reinhard Gruber, 86159 Augsburg (DE)
(72) Erfinder: Gruber, Reinhard, 86159 Augsburg (DE)
(74) Vertreter: Manitz, Finsterwald & Partner

(57) **Zusammenfassung**

Die Erfindung betrifft eine Anhängerdeichsel (10) zum Ankuppeln eines Anhängers an ein Kraftfahrzeug. Die Anhängerdeichsel (10) weist ein am Anhänger befestigbares Befestigungselement (30) auf, mit dem ein Zugelement (70) gekoppelt ist. Das Zugelement (70) weist an seinem freien Ende ein Kupplungsteil (72) zum Ankuppeln der Anhängerdeichsel (10) an eine Anhängerkupplung des Kraftfahrzeuges auf. Zwischen dem Befestigungselement (30) und dem Zugelement (70) ist ein mit einem arretierbaren Gelenk (50) versehenes Verbindungselement (58) zum Koppeln des Zugelements (70) mit dem Befestigungselement (30) angeordnet.

## Beschreibung

Die Erfindung betrifft eine Anhängerdeichsel zum Ankuppeln eines Anhängers an ein Kraftfahrzeug, mit einem an dem Anhänger befestigbaren Befestigungselement, und mit einem Zugelement, das mit dem Befestigungselement gekoppelt ist und an seinem freien Ende ein Kupplungsteil zum Ankuppeln an eine Anhängerkupplung des Kraftfahrzeuges aufweist. Ferner betrifft die Erfindung einen Anhänger mit einer Anhängerdeichsel.

Eine Anhängerdeichsel der eingangs genannten Art ist bekannt und ist üblicherweise an einem Anhänger vorgesehen, um diesen an eine am Heck des Kraftfahrzeuges vorgesehene Anhängerkupplung anzukuppeln.

Es ist Aufgabe der Erfindung, eine Anhängerdeichsel zum Ankuppeln eines Anhängers an ein Kraftfahrzeug bzw. einen Anhänger mit einer Anhängerdeichsel bereitzustellen, durch deren Verwendung das Ankuppeln des Anhängers an die Anhängerkupplung des Kraftfahrzeugs erleichtert ist.

Diese Aufgabe wird bei einer Anhängerdeichsel der eingangs genannten Art dadurch gelöst, daß zwischen dem Befestigungselement und dem Zugelement ein mit einem arretierbaren Gelenk versehenes Verbindungselement zum Kuppeln des Zugelementes mit dem Befestigungselement angeordnet ist. Ferner wird die Aufgabe durch einen Anhänger mit den Merkmalen nach Anspruch 18 gelöst.

Bei der erfindungsgemäßen Anhängerdeichsel ist zwischen dem am Anhänger befestigbaren Befestigungselement und dem Zugelement, dessen Kupplungsteil mit der Anhängerkupplung des Kraftfahrzeugs verkuppelt werden soll, das Gelenk angeordnet. Mit Hilfe des Gelenks ist ein Schwenken des Zugelementes und damit des Kupplungsteiles relativ zum Befestigungselement möglich. Zum Ankuppeln wird der Anhänger in seiner Parkstellung arretiert und anschließend das Kraftfahrzeug mit seiner Anhängerkupplung in den Schwenkbereich des Kupplungsteiles gefahren. Nach dem Lösen des arretierten Gelenks kann das Zugelement mit seinem Kupplungsteil relativ zum Befestigungselement verschwenkt und an die Anhängerkupplung angekuppelt werden. Sobald das Kupplungsteil mit der Anhängerkupplung verkuppelt ist, wird die Anhängerdeichsel durch Anfahren des Kraftfahrzeuges ausgerichtet und anschließend das Gelenk in dieser Position erneut arretiert. Nach dem Arretieren des Gelenks ist das aus Anhänger und Kraftfahrzeug gebildete Zuggespann fahrbereit. Durch die schwenkbare Ausbildung des Zugelementes relativ zum Anhänger entfällt insbesondere bei Starrdeichselanhängern einerseits das zeitaufwendige exakte Rangieren des Kraftfahrzeugs mit seiner Anhängerkupplung relativ zum Anhänger. Andererseits ist das kraftraubende Hin- und Herbewegen der mit dem Anhänger verbundenen Anhängerdeichsel, bei dem gegebenenfalls der gesamte Anhänger mitbewegt wird, entbehrlich, so daß das Ankuppeln des Anhängers bei Verwendung der erfindungsgemäßen Anhängerdeichsel insgesamt vereinfacht ist.

Vorteilhafte Weiterbildungen der Erfindung ergeben sieh aus der Beschreibung, den Zeichnungen sowie den Unteransprüchen.

So ist es besonders vorteilhaft, wenn das Zugelement derart verstellbar am Verbindungselement befestigt ist, daß der Abstand zwischen dem am Zugelement vorgesehenen Kupplungsteil und dem Befestigungselement, vorzugsweise dem Gelenk veränderbar ist. Dadurch kann der radiale Abstand des Kupplungsteiles relativ zum Befestigungselement während des Ankuppelns verändert werden, wodurch sich der Kupplungsbereich, in dem das Kupplungsteil während des Ankuppeins relativ zum Befestigungselement bewegbar ist, weiter vergrößert.

Bei einer bevorzugten Weiterbildung der erfindungsgemäßen Anhängerdeichsel ist das Zugelement zusätzlich am Befestigungselement verriegelbar, so daß die während des Ziehens des Anhängers entstehenden Zugkräfte zumindest teilweise unmittelbar vom Zugelement auf das Befestigungselement übertragen werden. Des weiteren wird bei dieser Weiterbildung vorgeschlagen, mit Hilfe des Zugelementes gleichzeitig auch das Gelenk in einer Ruhestellung zu arretieren, in der das am Zugelement vorgesehene Kupplungsteil in Zugrichtung der Anhängerdeichsel verläuft, wenn das Zugelement mit dem Befestigungselement verriegelt ist. Dadurch erfüllt das Zugelement gleichzeitig die Funktion einer Arretierungseinrichtung für das Gelenk.

Ferner ist es möglich, eine Arretiereinrichtung unmittelbar am Gelenk vorzusehen, so daß das Gelenk während des Ankuppelns arretiert oder gelöst werden kann und ein ungewolltes Ausknicken des Verbindungselementes vermieden wird.

Bei einer bevorzugten Ausführungsform der Anhängerdeichsel weist das Verbindungselement zwei Koppelelemente auf, die durch das als Drehgelenk ausgebildete Gelenk schwenkbar miteinander verbunden sind. Dabei ist das erste Koppelelement um eine parallel zur Schwenkachse des Drehgelenks verlaufende Achse schwenkbar bezüglich des Anhängers gelagert, während das zweite Koppelelement das Zugelement trägt. Durch die zweite Schwenkachse hat das Kupplungsteil bezüglich des Anhängers einen zusätzlichen Freiheitsgrad, wodurch der Kupplungsbereich, in dem das Kupplungsteil während des Ankuppelns bezüglich des Anhängers bewegbar ist, weiter vergrößert ist. Zum schwenkbaren Lagern dea ersten Koppelelementes am Anhänger wird vorgeschlagen, das fest mit dem als Drehschemel ausgebildeten Befestigungselement verbundene Koppelelement gemeinsam mit diesem schwenkbar um die Schwenkachse an einem am Anhänger befestigbaren Anhängersattel zu lagern, der die entstehenden Kräfte während des Ziehens und Ankuppelns aufnehmen kann. Gleichzeitig dient der Anhängersattel als Adapter zwischen der erfindungsgemäßen Anhängerdeichsel und unterschiedlich gestalteten Anhängertypen, so daß der Grundaufbau der Anhängerdeichsel unverändert beibehalten werden kann und nur der Anhängersattel dem jeweiligem Anhängertyp entsprechend angepaßt werden muß.

Bei einer Weiterbildung dieser bevorzugten Ausführungsform ist das als Rohr ausgebildete Zugelement auf das zweite Koppelelement aufgeschoben und kann zwischen einer Verriegelungsposition, in der es mit dem Befestigungselement verriegelt ist, und einer Endposition entlang des zweiten Koppelelementes verschoben werden, in der das am Zugelement vorgesehene Kupplungsteil größten radialen Abstand zum Drehgelenk einnimmt. Dabei ist es besonders von Vorteil, wenn das Zugelement in seiner Verriegelungsposition derart über das Drehgelenk auf das erste Koppelelement aufgeschoben ist, daß das Gelenk in seiner Ruhestellung arretiert ist. Bei dieser Ausbildung der bevorzugten Ausführungsform ist sichergestellt, daß das Drehgelenk arretiert ist, sobald das Zugelement zum Ziehen des Anhängers in seine Verriegelungsposition bewegt ist, in der es mit dem Befestigungselement verriegelt ist.

Des weiteren ist es bei dieser bevorzugten Ausführungsform von Vorteil, wenn das Zugelement verschieblich in einem Gleitlager aufgenommen ist, daß um einen parallel zur Schwenkachse des Drehgelenks verlaufende Schwenkachse drehbar ist. Dadurch wird erreicht, daß das Zugelement mit seinem Kupplungsteil eine definierte Lage relativ zum Befestigungselement einnimmt.

Schließlich wird bei allen Ausführungsbeispielen vorgeschlagen, das Befestigungselement als Drehschemel auszubilden, der schwenkbar an einem am Anhänger befestigbaren Anhängersattel gelagert ist, so daß das Verbindungselement gemeinsam mit dem Zugelement relativ zum Anhänger schwenkbar ist, während das Zugelement durch das Gelenk relativ zum Befestigungselement geschwenkt werden kann. Durch das Zusammenspiel der beiden möglichen Schwenkbewegungen kann das Kupplungsteil in einem Kupplungsbereich, in dem das Kupplungsteil mit der Anhängerkupplung des Kraftfahrzeuges verkuppelt werden kann, verschwenkt werden, dessen radialer Abstand zum Anlenkpunkt des Drehschemels am Anhänger variabel ist.

Nachfolgend wird die Erfindung anhand eines Ausführungsbeispieles unter Bezugnahme auf die Zeichnung näher erläutert, darin zeigen:
- Fig. 1: eine teilweise geschnittene Seitenansicht einer erfindungsgemäßen Anhängerdeichsel;
- Fig. 2: eine Draufsicht auf die Anhängerdeichsel nach Fig. 1; und
- Fig. 3: eine Draufsicht auf die Anhängerdeichsel nach Fig. 1 während des Ankuppelns.

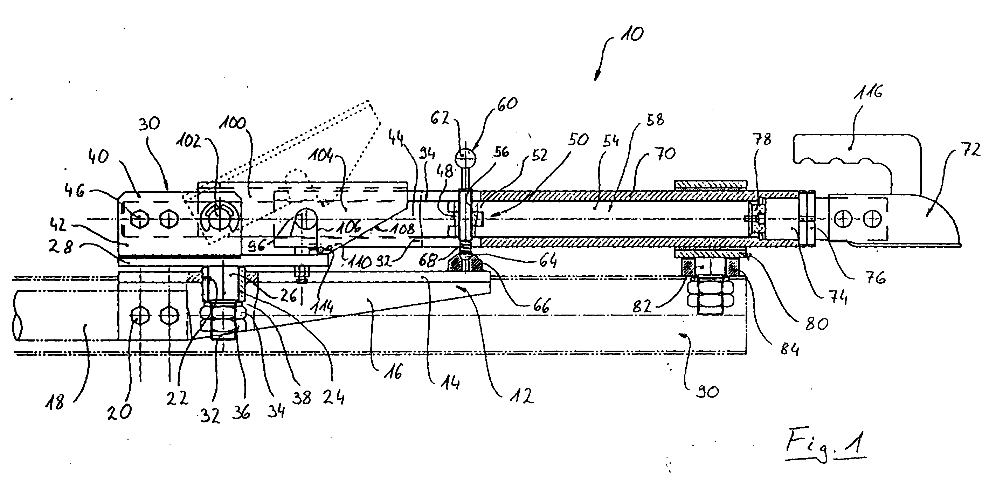

Die Fig. 1 bis 3 zeigen eine an einem Anhänger (nicht dargestellt), wie beispielsweise einem Starrdeichselanhänger, befestigte Anhängerdeichsel 10 zum Ankuppeln des Anhängers an eine Anhängerkupplung (nicht dargestellt) eines Kraftfahrzeuges. Die Anhängerdeichsel 10 weist einen im Querschnitt U-förmigen Sattel 12 auf, zwischen dessen von seiner Grundplatte 14 rechtwinklig nach unten abstehenden Schenkeln 16 die gegebenenfalls mit einer Auflaufbremse ausgestattete Starrdeichsel 18 des Anhängers aufgenommen und an den Schenkeln 16 mit Schrauben 20 befestigt ist. Mittig zwischen den beiden Schenkeln 16 ist nahe der Stirnseite der Starrdeichsel 18 in der Grundplatte 14 eine Bohrung 22 ausgebildet, in der eine mit der Grundplatte 14 verschweißte Buchse 24 aufgenommen ist.

Die Buchse 24 dient als Schwenklager für einen Drehzapfen 26, der von der Unterseite einer Platte 28 eines als Befestigungselement für die Anhängerdeichsel 10 dienenden Drehschemels 30 rechtwinklig absteht. An dem aus der Buchse 24 hervorstehenden Endabschnitt 32 des Drehzapfens 26 ist ein Gewinde ausgebildet, auf das zwei miteinander gekonterte Muttern 34 und 36 aufgeschraubt sind, wobei sich die Mutter 34 durch eine Beilagscheibe 38 an der Stirnseite der Buchse 24 abstützt.

Von der Oberseite der Platte 28 des Drehschemels 30 stehen rechtwinklig zwei Halteplatten 40 und 42 nach oben ab, die voneinander beabstandet sind. Jede Halteplatte 40 bzw. 42 geht mit ihrer in Fig. 1 links dargestellten Stirnseite in die Stirnseite der Platte 28 über, liegt mit ihrer unteren Längsseite auf der Platte 28 auf und ist an dieser nahe der jeweiligen Seitenkante der Platte 28 verschweißt.

Zwischen den beiden Halteplatten 40 und 42 ist ein erstes Koppelrohr 44 aufgenommen, das nahe seinem zwischen den Halteplatten 40 und 42 aufgenommenen Ende durch zwei Schrauben 46 mit diesen verschraubt ist. Das freie Ende des Koppelrohrs 44 weist ein Gelenkauge 48 eines Gelenks 50 auf, das in einer Gelenkgabel 52 aufgenommen ist, die am Ende eines zweiten Koppelrohres 54 ausgebildet ist. Durch die Gelenkgabel 52 des zweiten Koppelrohrs 54 und das Gelenkauge 48 des ersten Koppelrohrs 44 ist eine Hülse 56 gesteckt, die als Gelenkachse für das Gelenk 50 dient und die beiden Koppelrohre 44 und 54 schwenkbar miteinander verbindet. Das erster Koppelrohr 44 und das zweite Koppelrohr 54 haben die gleichen Außendurchmesser und bilden gemeinsam mit dem Gelenk 50 ein Verbindungselement 58, dessen Zweck später noch erläutert wird.

In die Hülse 56 ist ein Rastbolzen 60 eingeführt, der an seinem in Fig. 1 oben gezeigten Ende einen Kugelknopf 62 aufweist. An seinem unteren Ende ist eine Rastspitze 64 ausgebildet, die mit einer auf der Oberseite der Grundplatte 14 des Sattels 12 verschweißten Rastaufnahme 66 in Eingriff steht, wobei eine auf den Rastbolzen 60 aufgeschobene, sich an der unteren Stirnseite der Hülse 56 abstützende Druckfeder 68, die an einem nahe der Rastspitze 64 ausgebildeten Bund anliegt, die Rastspitze 64 in Richtung der Rastaufnahme 66 vorspannt.

Auf das aus den beiden Koppelrohren 44 und 54 gebildete Verbindungselement 58 ist ein Zugrohr 70 aufgeschoben, an dessen dem Drehschemel 30 abgewandten Ende als Kupplungsteil ein Kupplungsmaul 72 befestigt ist, mit dem die Anhängerdeichsel 10 mit der Anhängerkupplung des Kraftfahrzeugs verkuppelt werden kann. Wie Fig. 1 zeigt, weist das Kupplungsmaul 72 an seinem in das Zugrohr 70 eingeführten Befestigungsabschnitt 74 ein Gewinde auf, das mit einem im Zugrohr 70 ausgebildeten Innengewinde verschraubt ist. Auf den Befestigungsabschnitt 74 sind zwei Kontermuttern 76 aufgeschraubt, die gegen die Stirnseite des Zugrohrs 70 gekontert sind und mit deren Hilfe die relative Lage des Kupplungsmauls 72 zum Zugrohr 70 eingestellt werden kann. Die Stirnseite des Befestigungsabschnittes 74 liegt in der in Fig. 1 dargestellten Position des Zugrohrs 70 an einem am freien Ende des zweiten Koppelrohrs 54 befestigten elastischen Elementes 78 an. Anstelle des Kupplungsmauls 72 kann als Kupplungsteil auch eine Zugöse oder ähnliches vorgesehen sein, die in entsprechender Weise mit dem Zugrohr 70 verbunden ist.

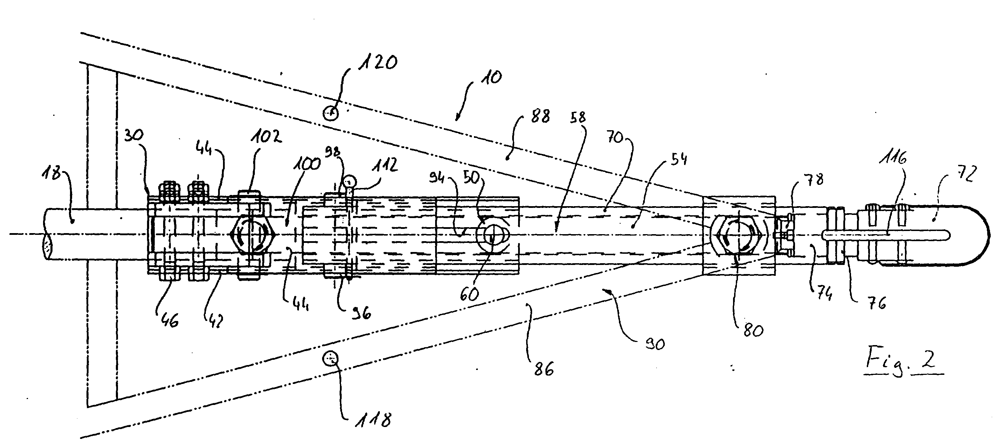

Das Zugrohr 70 ist in einem Gleitlager 80 verschieblich aufgenommen, das etwa im Bereich des freien Endes des zweiten Koppelrohrs 54 angeordnet ist. Das Gleitlager 80 weist an seiner Unterseite einen Lagerzapfen 82 auf, der in einer Lagerbuchse 84 schwenkbar gelagert ist, wobei die Schwenkachse des Lagerzapfens 82 parallel zur Schwenkachse des Drehzapfens 26 des Drehschemels 30 verläuft. Die Lagerbuchse 84 ist am Verbindungspunkt zweier V-förmig zueinander verlaufender Träger 86 und 88 (vgl. Fig. 2) befestigt, die eine V-förmige Deichsel 90 des Anhängers bilden.

Das Zugrohr 70 ist in seiner Länge so bemessen, daß es in der in den Fig. 1 und 2 dargestellten Position, in der das am Zugrohr 70 befestigte Kupplungsmaul 72 mit der Stirnseite seines Befestigungsabschnittes 74 an dem am zweiten Koppelrohr 54 vorgesehenen elastischen Element 78 anliegt, über das Gelenk 50 auf das erste Koppelrohr 44 aufgeschoben ist, wobei das dem Drehschemel 30 zugewandte freie Ende des Zugrohrs 70 nahe den beiden Halteplatten 40 und 42 endet. Damit der Rastbolzen 60 betätigbar bleibt und mit der Rastaufnahme 66 in Eingriff stehen kann, wenn das Zugrohr 70 in die in den Fig. 1 und 2 dargestellte Position bewegt ist, sind am Zugrohr 70 zwei in dessen Längsrichtung verlaufende Schlitze 92 und 94 ausgebildet, durch die der Ratsbolzen 60 ragt und die eine Bewegung des Zugrohrs 70 relativ zu dem Rastbolzen 60 entlang der beiden Koppelrohre 44 und 54 ermöglichen. Nahe dem dem Drehschemel 30 zugewandten Ende des Zugrohrs 70 stehen von dessen Mantelfläche in radialer Richtung zwei miteinander fluchtende Bolzen 96 und 98 nach außen ab, deren Zweck später erläutert wird.

An den beiden Halteplatten 40 und 42 ist eine im Querschnitt U-förmige Falle 100 durch einen quer zu den Halteplatten 40 und 42 verlaufenden Lagerbolzen 102 schwenkbar gelagert. Wie Fig. 1 zeigt, weist die Falle 100 an jedem ihrer Schenkel 104, von denen in Fig. 1 nur der Schenkel 104 zu sehen ist, eine Verriegelungsöffnung 106 auf, die mit dem Bolzen 96 bzw. 98 des Zugrohrs 70 in Eingriff gebracht werden kann. Die Falle 100 ist zwischen einer Entriegelungsstellung (in Fig. 1 gestrichelt dargestellt), in der sie die Bolzen 96 und 98 freigibt, und einer Verriegelungsatellung (in Fig. 1 durchgezogen dargestellt) schwenkbar, in der die Falle 100 mit ihren Verriegelungsöffnungen 106 mit den Bolzen 96 und 98 des Zugrohrs 70 in Eingriff steht, so daß das Zugrohr 70 mit dem Drehschemel 30 verriegelt ist.

Wie zuvor bereits erläutert, kann die relative Position des Kupplungsmaules 72 zum Zugrohr 70 durch entsprechendes Ein- und Ausschrauben des Befestigungsabschnittes 74 verändert werden. Gleichzeitig ist es möglich, die relative Lage des Zugrohrs 70 zum Verbindungselement 58 zu verändern, um die Position der Bolzen 96 und 98 relativ zu-den Verriegelungsöffnungen 106 an der Falle 100 zu justieren, da die Endposition des Zugrohrs 70 relativ zum Verbindungselement 58 davon abhängt, wie weit die am elastischen Element 78 anliegende Stirnseite des Befestigungsabschnittes 74 des Kupplungsmaules 72 in das Zugrohr 70 ragt.

Die dem Drehschemel 30 abgewandte Stirnseite jedes Schenkels 104 geht unter Bildung einer Anlaufschräge 108 in einen Schenkelabschnitt 110 über, mit dem sich die Falle 100 auf der Platte 28 des Drehschemels 30 abstützt. Wie Fig. 1 weiter zeigt, ist das Zugrohr 70 50 an dem Verbindungselement 58 geführt, daß es mit geringem Abstand zur Platte 28 des Drehschemels 30 verläuft, wobei sich zwischen der Platte 28 und der Unterseite des Zugrohrs 70 ein Spalt ausbildet. An jedem der beiden Schenkel 104 ist eine Bohrung zur Aufnahme eines Sicherungsbolzens 112 ausgebildet, die miteinander fluchten und bei in die Verriegelungsstellung geschwenkter Falle 100 im Bereich des Spaltes angeordnet sind. Sobald die Falle 100 in ihre Verriegelungsstellung geschwenkt ist, in der sie mit den Schenkelabschnitten 110 ihrer Schenkel 104 auf der Platte 28 des Drehschemels 30 aufliegt, kann der Sicherungsbolzen 112 durch die Bohrungen in den Schenkeln 104 und den Spalt zwischen dem Zugrohr 70 und der Platte 28 geführt und mit Hilfe eines Federsteckers 114 gesichert werden, wodurch ein Lösen der Falle 100 aus ihrer Verriegelungsstellung verhindert wird.

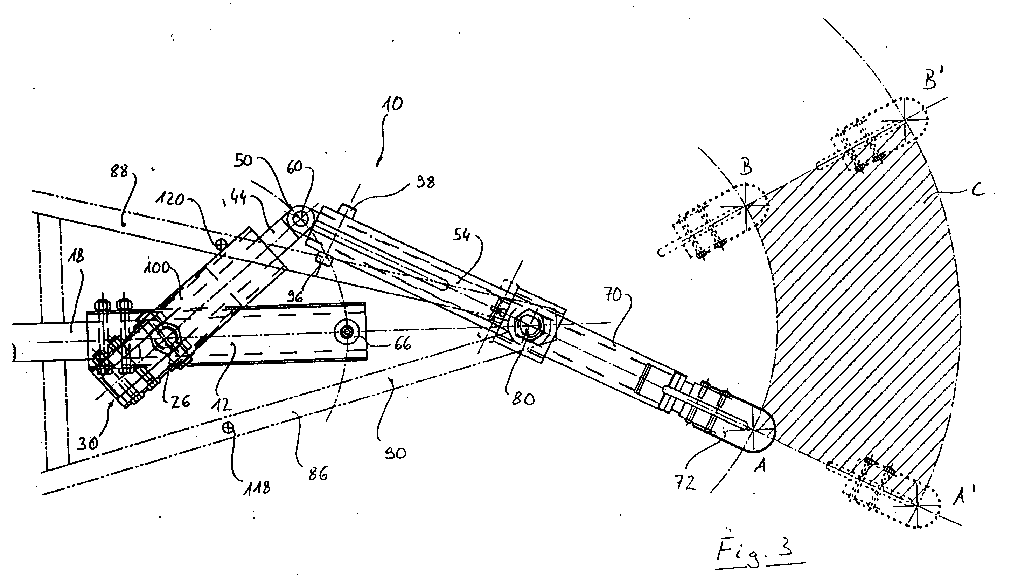

Nachfolgend wird die Funktionsweise der Anhängerdeichsel 10 insbesondere unter Bezugnahme auf Fig. 3 näher erläutert. Sobald der Anhänger an die Anhängerkupplung des Kraftfahrzeuges angekuppelt werden soll, wird zunächst der Sicherungsbolzen 112 gelöst und die in der Verriegelungsstellung befindliche Falle 100 in ihre Entriegelungsstellung bewegt, in der die an den Schenkeln 104 ausgebildeten Verriegelungsöffnungen 106 (vgl. Fig. 1) nicht mehr mit den Bolzen 96 und 98 in Eingriff stehen. Nachdem die Falle 100 in ihre Entriegelungsstellung bewegt worden ist, kann das Zugrohr 70 mit Hilfe eines vom Kupplungsmaul 72 abstehenden Handgriffes 116 entlang des Verbindungselementes 58 ausgezogen werden, wobei das Zugrohr 70 durch die beiden Schlitze 92 und 94 vom Rastbolzens 60 geführt wird. Das Zugrohr 70 wird bei diesem Vorgang zunächst soweit ausgezogen, bis das Gelenk 50 freigegeben ist. In dieser Zwischenstellung des Zugrohrs 70 wird der Rastbolzen 60 durch Ziehen am Kugelknopf 62 aus der Rastaufnahme 66 bewegt, so daß das Kupplungsmaul 72 durch das Gelenk 50 relativ zum Sattel 12 zwischen zwei Winkelpositionen A und B hin- und hergeschwenkt werden kann, wie Fig. 3 zeigt. Die Schwenkbewegung, die durch den schwenkbaren Drehschemel 30, das Gelenk 50 und das schwenkbare Gleitlager 80 ermöglicht wird, ist nur durch zwei Anschläge 118 und 120 begrenzt, die jeweils an der Oberseite des Trägers 86 bzw. 88 der V-förmigen Deichsel 90 befestigt sind und an denen der Drehschemel 30 mit seiner linken bzw. rechten Seitenkante der Platte 28 zum Anschlag kommen kann.

Sollte der Schwenkbereich, in dem das Kupplungsmaul 72 schwenkbar ist, nicht ausreichen, um den Anhänger an die Anhängerkupplung des Kraftfahrzeuges anzukuppeln, ist es ferner möglich, das Zugrohr 70 in eine Endposition entlang des Koppelrohrs 54 zu verschieben, in der es mit seinen beiden Bolzen 96 und 98 am Gleitlager 80 zur Anlage kommt. Auf diese Weise kann der Abstand des Kupplungsmaules 72 relativ zum Gelenk 50 derart vergrößert werden, daß das Kupplungsmaul 72 zwischen zwei Endwinkelpositionen A' und B' hin- und herbewegt werden kann, die größtmöglichen radialen Abstand zum Gelenk 50 aufweisen. Da das Zugrohr 70 zwischen dieser Zwischenposition, in der das Zugrohr 70 das Gelenk 50 gerade zum Schwenken freigegeben hat und der Endposition stufenlos verstellbar ist, kann das Kupplungsmaul 72 zwischen den Winkelpositionen A und B und den Winkelendpositionen A' und B' stufenlos hin- und hergeschwenkt werden. Dadurch ergibt sich ein Kupplungsbereich C, wie er in Fig. 3 durch Schraffur angedeutet ist, innerhalb dessen das Kupplungsmaul 72 problemlos an die Anhängerkupplung des Kraftfahrzeuges angekuppelt werden kann.

Sobald des Kupplungsmaul 72 an die Anhängerkupplung des Kraftfahrzeuges angekuppelt worden ist, wird das Kraftfahrzeug in Bewegung gesetzt, wobei sich das im Gelenk 50 abgewinkelte Verbindungselement 58 soweit streckt, bis die beiden Koppelrohre 44 und 54 wieder miteinander fluchten. Dabei kommt der zuvor gelöste Rastbolzen 60 mit der am feststehenden Sattel 12 verschweißten Rastaufnahme 66 in Eingriff, so daß ein Verschwenken der beiden Koppelrohre 44 und 54 relativ zueinander verhindert ist.

In dem Augenblick, in dem der Rastbolzen 60 einrastet, kann das Kraftfahrzeug rückwärts gefahren werden, wodurch das Zugrohr 70 vom Kraftfahrzeug wieder auf das Verbindungselement 58 in seine Verriegelungsposition bewegt wird, in der es mit der Falle 100 in Eingriff gebracht werden kann. Sollte sich die Falle 100 zwischenzeitlich in ihre Verriegelungsstellung zurück bewegt haben, in der sie mit ihren Schenkelabschnitten 110 auf der Platte 28 des Drehschemels 30 aufliegt, wird die Falle 100 durch die Bolzen 96 und 98 des Zugrohrs 70, diemit den Anlaufschrägen 108 an den Schenkelabschnitten 110 in Berührung kommen soweit angehoben, bis die Bolzen 96 und 98 mit den Verriegelungsöffnungen 106 in Eingriff kommen können. Damit das Zugrohr 70 nicht zu weit in Richtung des Drehschemels 30 verschoben werden kann, kommt das Kupplungsmaul 72 mit seinem Befestigungsabschnitt 74 an dem an der Stirnseite des zweiten Koppelrohres 54 befestigten elastischen Element 78 zur Anlage.

In dieser Verriegelungsposition des Zugrohrs 70 kann die mit den Bolzen 96 und 98 in Eingriff stehende Falle 100 durch den Sicherungsbolzen 112 gesichert werden, wodurch ein Öffnen der Falle 100 wirksam verhindert wird. Sobald die Falle 100 gesichert ist, kann das Kraftfahrzeug den Anhänger ziehen, wobei die entstehenden Zugkräfte über das Kupplungsmaul 72 und das Zugrohr 70 von den Bolzen 96 und 98 an die Falle 100 übertragen werden, die ihrerseits die Kräfte durch den Lagerbolzen 102 an den Drehschemel 30 überträgt. Der Drehschemel 30 überträgt seinerseits die entstehenden Zugkräfte durch den Drehzapfen 26 auf den Sattel 12, der die Kräfte an die Starrdeichsel 18 weiterleitet.

Im beschriebenen Ausführungsbeispiel wurde als Gelenk 50 ein Drehgelenk verwendet. Alternativ ist es auch möglich ein Gelenk mit mehreren Freiheitgraden, wie beispielsweise ein Kugelgelenk, zu verwenden, mit dem eine Schwenkbewegung des Kupplungsmaules 72 in einer weiteren Schwenkebene möglich ist.

### Bezugszeichenliste

- 10: Anhängerdeichsel
- 12: Sattel
- 14: Grundplatte
- 16: Schenkel
- 18: Starrdeichsel
- 20: Schrauben
- 22: Bohrung
- 24: Buchse
- 26: Drehzapfen
- 28: Platte
- 30: Drehschemel
- 32: Endabschnitt
- 34: Mutter
- 36: Mutter
- 38: Beilagscheibe
- 40: Halteplatte
- 42: Halteplatte
- 44: erstes Koppelrohr
- 46: Schrauben
- 48: Gelenkauge
- 50: Gelenk
- 52: Gelenkgabel
- 54: zweites Koppelrohr
- 56: Hülse
- 58: Verbindungselement
- 60: Rastbolzen
- 62: Kugelknopf
- 64: Rastspitze
- 66: Rastaufnahme
- 68: Druckfeder
- 70: Zugrohr
- 72: Kupplungsmaul
- 74: Befestigungsabschnitt
- 76: Kontermuttern
- 78: elastisches Element
- 80: Gleitlager
- 82: Lagerzapfen
- 84: Lagerbuchse
- 86: Träger
- 88: Träger
- 90: V-förmige Deichsel
- 92: Schlitz
- 94: Schlitz
- 96: Bolzen
- 98: Bolzen
- 100: Falle
- 102: Lagerbolzen
- 104: Schenkel
- 106: Verriegelungsöffnung
- 108: Anlaufschräge
- 110: Schenkelabschnitt
- 112: Sicherungsbolzen
- 114: Federstecker
- 116: Handgriff
- A: Winkelposition
- B: Winkelposition
- 118: Anschlag
- 120: Anschlag
- A': Endwinkelposition
- B': Endwinkelposition
- C: Kupplungsbereich

## Patentansprüche

1. Anhängerdeichsel zum Ankuppeln eines Anhängers an ein Kraftfahrzeug, mit einem an dem Anhänger befestigbaren Befestigungselement (30), und mit einem Zugelement (70), das mit dem Befestigungselement (30) gekoppelt ist und an seinem freien Ende ein Kupplungsteil (72) zum Ankuppeln an eine Anhängerkupplung des Kraftfahrzeuges aufweist,
dadurch **gekennzeichnet,**
daß zwischen dem Befestigungselement (30) und dem Zugelement (70) ein mit einem arretierbaren Gelenk (50) versehenes Verbindungselement (58) zum Koppeln des Zugelementes (70) mit dem Befestigungselement (30) angeordnet ist.

2. Anhängerdeichsel nach Anspruch 1,
dadurch **gekennzeichnet,**
daß das Zugelement (70) derart verstellbar am Verbindungselement (58) befestigt ist, daß der Abstand zwischen dem am Zugelement (70) vorgesehenen Kupplungsteil (72) und dem Befestigungselement (30), vorzugsweise dem Gelenk (50) veränderbar ist.

3. Anhängerdeichsel nach Anspruch 1 oder 2,
dadurch **gekennzeichnet,**
daß das Zugelement (70) in mit dem Befestigungselement (30) verrigelbar ist und im verriegeltern Zustand das Gelenk (50) in einer Ruhestellung arretiert, in der das am Zugelement (70) vorgesehene Kupplungsteil (72) in Zugrichtung der Anhängerdeichsel (10) verläuft.

4. Anhängerdeichsel nach Anspruch 1, 2 oder 3,
dadurch **gekennzeichnet,**
daß das Zugelement (70) in mit dem Befestigungselement (30) verrigelbar ist und am Befestigungselement (30) oder am Zugelement (70) zum Verriegeln des Zugelementes (70) mit dem Befestigungselement (30) eine Falle (100) schwenkbar gelagen ist, die mit mindestens einem vom Zugelement (70) oder vom Befestigungselement (30) abstehenden Bolzen (96, 98) in ein Eingriff bringbar ist.

5. Anhängerdeichsel nach einem der Ansprüche 1 bis 4,
dadurch **gekennzeichnet,**
daß das Gelenk (50) in einer Ruhestellung arretierbar ist, in der das am Zugelement (70) vorgesehene Kupplungsteil (72) in Zugrichtung der Anhängerdeichsel (10) verläuft, wobei hierfür vorzugsweise eine Arretiereinrichtung (60) am Gelenk (50) vorgesehen ist.

6. Anhängerdeichsel nach einem der Ansprüche 1 bis 5,
dadurch **gekennzeichnet,**
daß das Verbindungselement (58) zwei durch das als Drehgelenk (50) ausgebildete Gelenk schwenkbar miteinander verbundene Koppelelemente (44, 54) aufweist, wobei das erste Koppelelement (44) um eine parallel zur Schwenkachse des Drehgelenks (50) verlaufende Achse schwenkbar bezüglich des Anhängers gelagert ist und das zweite Koppelelement (54) das Zugelement (70) trägt.

7. Anhängerdeichsel nach Anspruch 6,
dadurch **gekennzeichnet,**
daß das erste Koppelelement (44) fest mit dem als Drehschemel (30) ausgebildeten Befestigungselement verbunden und gemeinsam mit diesem schwenkbar um die Schwenkachse an einem am Anhänger befestigbaren Anhängersattel (12) gelagert ist.

8. Anhängerdeichsel nach Anspruch 6 oder 7
dadurch **gekennzeichnet,**
daß das als Rohr ausgebildete Zugelement (70) auf das zweite Koppelelement (54) aufgeschoben ist und zwischen einer Verriegelungsposition, in der es mit dem Befestigungselement (30) verriegelt ist, und einer Endposition entlang des zweiten Koppelelementes (54) verschieblich ist, in der das am Zugelement (70) vorgesehene Kupplungsteil (72) größten radialen Abstand zum Drehgelenk (50) einnimmt,
wobei insbesondere das Zugelement (70) in seiner Verriegelungsposition derart über das Drehgelenk (50) auf das erste Koppelelement (44) aufgeschoben sein kann, daß das Drehgelenk (50) in einer Ruhestellung arretiert ist, in der die Koppelelemente (44, 54) miteinander fluchten und das am Zugelement (70) vorgesehene Kupplungsteil (72) in Zugrichtung der Anhängerdeichsel (10) verläuft.

9. Anhängerdeichsel nach Anspruch 8,
dadurch **gekennzeichnet,**
daß das Kupplungsteil (72) mit Hilfe einer Stelleinrichtung (76) am Zugelement (70) befestigt ist, wobei sich das Kupplungsteil (72) mit seinem in das freie Ende des rohrförmigen Zugelementes (70) eingeführten Befestigungsabschnitt (74) an einer diesem zugewandten Stirnseite des zweiten Koppelelementes (54) abstützt und durch Einstellen der Stelleinrichtung (76) die Verriegelungsposition des Zugelementes (70) relativ zum Befestigungselement (30) verstellbar ist.

10. Anhängerdeichsel nach Anspruch 8 oder 9,
dadurch **gekennzeichnet,**
daß zwischen der Stirnseite eines in das freie Ende des rohrförmigen Zugelementes (70) eingeführten Befestigungsabschnittes (74) des Kupplungsteils (72) und der diesem zugewandten Stirnseite des zweiten Koppelelementes (54) ein elastisches Element (78) vorgesehen ist.

11. Anhängerdeichsel nach einem der Ansprüche 1 bis 10,
dadurch **gekennzeichnet,**
daß ein Gleitlager (80) vorgesehen ist, in dem das Zugelement (70) verschieblich aufgenommen ist, wobei das Gleitlager (80) um eine parallel zur Schwenkachse des Drehgelenks (50) verlaufende Schwenkachse drehbar ist, wobei insbesondere das Gleitlager (80) an einer starr mit dem Anhänger verbindbaren, vorzugsweise V-förmigen zweiten Deichsel (90) drehbar gelagert sein kann.

12. Anhängerdeichsel nach einem der vorhergehenden Ansprüche,
dadurch **gekennzeichnet,**
daß das Befestigungselement als Drehschemel (30) ausgebildet ist, der schwenkbar an einem am Anhänger befestigbaren Anhängersattel (12) gelagert ist.

13. Anhänger zum Ankuppeln an ein Kraftfahrzeug, mit einer Anhängerdeichsel (10) nach einem der vorhergehenden Ansprüche.
